# EUROPEAN PATENT SPECIFICATION

(11) **EP 4 407 829 B1**
(45) Date of publication and mention of the grant of the patent: **04.03.2026**
(21) Application number: 22881312.7
(22) Date of filing: 11.10.2022
(51) Int. Cl.: H02J 7/00, H01M 10/42

(54) **BATTERY MANAGEMENT APPARATUS AND OPERATING METHOD THEREOF**
BATTERIEVERWALTUNGSVORRICHTUNG UND VERFAHREN ZU DEREN BETRIEB
DISPOSITIF DE GESTION DE BATTERIE ET PROCÉDÉ DE FONCTIONNEMENT ASSOCIÉ

(30) Priority: 15.10.2021 KR 20210137790
(43) Date of publication of application: 31.07.2024
(73) Proprietor: LG Energy Solution, Ltd., Seoul 07335 (KR)
(72) Inventor: LEE, Mu Yeon, Daejeon 34122 (KR)
(74) Representative: Plasseraud IP
(86) International application number: PCT/KR2022/015304
(87) International publication number: WO 2023/063685

(56) References cited:
- EP-A1- 0 545 747
- DE-A1- 102014 012 067
- JP-A- 2012 115 100
- KR-A- 20170 070 525
- KR-A- 20210 031 318
- KR-A- 20210 031 318
- KR-B1- 102 258 557
- US-B2- 8 421 412

## Description

### [TECHNICAL FIELD]

Embodiments disclosed herein relate to a battery management apparatus and an operating method thereof.

### [BACKGROUND ART]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

Generally, a lithium-ion battery may be implemented with a plurality of battery cells to supply power. The plurality of battery cells may have a voltage difference due to a chemical difference, a physical difference, an aging degree difference, etc., and the voltage difference causes a difference in a charging/discharging time and a charging/discharging amount of each battery cell in a situation where charging and discharging of the battery cell continues. A battery cell having undergone a lot of degradation has a shorter charging/discharging time than other battery cells and thus is first fully charged or discharged, such that charging or discharging of relatively less degraded battery cells is terminated before they are fully charged or discharged. To solve these problems, various cell balancing techniques for a plurality of battery cells have been introduced.

Passive cell balancing consumes energy of a cell using a resistor, such that as more current flows, the temperature of the resistor increases, and for lower current, the speed of cell balancing decreases. As the temperature of the resistor increases, the temperature of a printed circuit board (PCB) also increases, resulting in a risk of fire. Thus, there is a need for a method of managing the temperature of the PCB when passive cell balancing is performed. The document DE1020140120067A1 discloses a cell arrangement including a circuit device for charge equalization. A sub circuit is switched parallel to the battery cell, and has an electronic controllable switch that is switched parallel to the battery cell. The switch is linked with a control unit for controlling the switch. The sub circuit has a resistor that is designed as temperature-dependant resistor whose resistance value is large with increasing temperature.

### [DISCLOSURE]

### [TECHNICAL PROBLEM]

Embodiments disclosed herein aim to provide a battery management apparatus and an operating method thereof in which a temperature of a resistor is managed not to increase more than a specific value.

Technical problems of the embodiments disclosed herein are not limited to the above-described technical problems, and other unmentioned technical problems would be clearly understood by one of ordinary skill in the art from the following description.

### [TECHNICAL SOLUTION]

A battery management apparatus according to an embodiment disclosed herein is defined by the independent claim 1. In detail, it includes a cell balancing unit connected to a battery cell and configured to perform balancing of the battery cell, an auxiliary cell balancing unit connected to the battery cell and configured to perform auxiliary balancing of the battery cell, a voltage dividing unit configured to generate a divided voltage by dividing a voltage of the battery cell based on a temperature of the cell balancing unit and apply the generated divided voltage to the auxiliary cell balancing unit, and a controller configured to control the cell balancing unit based on the generated divided voltage. Moreover, the controller is further configured to control an operation of the cell balancing unit based on the voltage of the battery cell.

In an embodiment, the cell balancing unit may include a first resistor and a first switch, the auxiliary cell balancing unit may include a second resistor and a second switch, and the cell balancing unit and the auxiliary cell balancing unit may be connected in parallel to each other.

In an embodiment, the voltage dividing unit may include an NTC resistor and a third resistor having a resistance changing based on a temperature of the first resistor.

In an embodiment, the controller may be further configured to short-circuit the first switch when the generated divided voltage is less than or equal to a preset value, and to open the first switch when the generated voltage is equal to or greater than the preset value.

In an embodiment, the NTC resistor may be positioned to have a temperature corresponding to the temperature of the first resistor.

In an embodiment, the voltage dividing unit may be further configured to apply the generated divided voltage to the second switch.

In an embodiment, any one of the first switch and the second switch may be short-circuited based on the generated divided voltage.

In an embodiment, the first resistor and the second resistor may have the same resistance as each other.

In an embodiment, the controller may be further configured to control an operation of the cell balancing unit based on the voltage of the battery cell.

In an embodiment, the auxiliary cell balancing unit may be further configured to perform auxiliary balancing of the battery cell when the temperature of the cell balancing unit is equal to or greater than a preset value.

An operating method of a battery management apparatus according to an embodiment disclosed herein includes performing cell balancing of a battery cell, generating a divided voltage by dividing a voltage of the battery cell based on a temperature of a cell balancing unit, applying the generated divided voltage to an auxiliary cell balancing unit, performing auxiliary balancing of the battery cell, and controlling the cell balancing unit based on the generated divided voltage.

In an embodiment, the cell balancing unit may include a first resistor and a first switch serially connected thereto, the auxiliary cell balancing unit may include a second resistor and a second switch serially connected thereto, and the cell balancing unit and the auxiliary cell balancing unit may be connected in parallel to each other.

In an embodiment, the controlling of the cell balancing unit based on the generated divided voltage may include short-circuiting the first switch when the generated divided voltage is less than or equal to a preset value, and opening the first switch when the generated voltage is equal to or greater than the preset value.

### [ADVANTAGEOUS EFFECTS]

A battery management apparatus and an operating method thereof according to an embodiment disclosed herein may manage a temperature of a resistor for performing cell balancing not to increase more than a preset value without adjusting a current for performing passive balancing.

A battery management apparatus and an operating method thereof according to an embodiment disclosed herein may sense a temperature of a resistor for performing cell balancing through NTC and distribute a voltage of a battery cell, thereby controlling a resistor that is different from the temperature-increased resistor to perform cell balancing.

A battery management apparatus and an operating method thereof according to an embodiment disclosed herein may unify a cell balancing unit configured to perform cell balancing and a voltage dividing unit configured to sense a temperature of a resistor to distribute a voltage, thereby providing an efficient circuit.

A battery management apparatus and an operating method thereof according to an embodiment disclosed herein may manage a temperature of a cell balancing resistor without increasing a cell balancing time because of not adjusting a cell balancing current.

A battery management apparatus and an operating method thereof according to an embodiment disclosed herein may simply implement a circuit by controlling an operation of a switch of an auxiliary cell balancing unit by an NTC resistor that measures a temperature.

Moreover, various effects recognized directly or indirectly from the disclosure may be provided.

### [DESCRIPTION OF DRAWINGS]

FIG. 1 illustrates a battery pack according to an embodiment disclosed herein.
FIG. 2 is a block diagram of a battery management apparatus according to an embodiment disclosed herein.
FIGS. 3 and 4 are views for describing an operation of a battery management apparatus, according to an embodiment disclosed herein.
FIG. 5 is a flowchart of an operating method of a battery management apparatus according to an embodiment disclosed herein.
FIG. 6 is a block diagram showing a hardware configuration of a computing system for performing an operating method of a battery management apparatus, according to an embodiment disclosed herein.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present application.

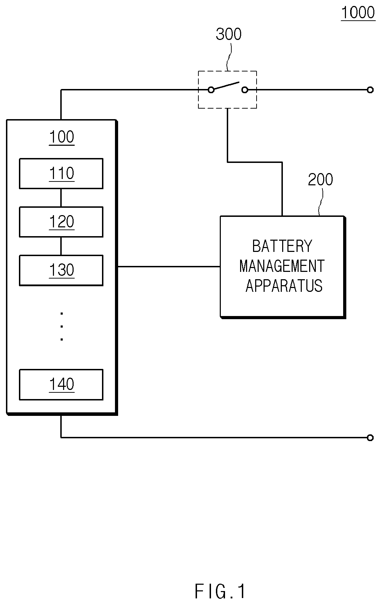

FIG. 1 illustrates a battery pack according to an embodiment disclosed herein.

Referring to FIG. 1, a battery pack 1000 according to an embodiment disclosed herein may include a battery module 100, a battery management apparatus 200, and a relay 300.

The battery module 100 may include a plurality of battery cells 110, 120, 130, and 140. Although the plurality of battery cells are illustrated as four in FIG. 1, the present disclosure is not limited thereto, and the battery module 100 may include n battery cells (n is a natural number greater than or equal to 2). The battery module 100 may supply power to a target device (not shown). To this end, the battery module 100 may be electrically connected to the target device. Herein, the target device may include an electrical, electronic, or mechanical device that operates by receiving power from the battery pack 1000 including the plurality of battery cells 110, 120, 130, and 140, and the target device may be, for example, an electric vehicle (EV), but is not limited thereto.

The plurality of battery cells 110, 120, 130, and 140 may be a lithium ion (Li-ion) battery, an Li-ion polymer battery, a nickel-cadmium (Ni-Cd) battery, a nickel hydrogen (Ni-MH) battery, etc., and are not limited thereto. Meanwhile, although one battery module 100 is illustrated in FIG. 1, the battery module 100 may be configured in plural according to an embodiment.

The battery management apparatus 200 may manage and/or control a state and/or an operation of the battery module 100. For example, the battery management apparatus 200 may manage and/or control the states and/or operations of the plurality of battery cells 110, 120, 130, and 140 included in the battery module 100. The battery management apparatus 200 may manage charging and/or discharging of the battery module 100.

In addition, the battery management apparatus 200 may monitor a voltage, a current, a temperature, an insulation resistance, etc., of the battery pack 1000, the battery module 100 and/or each of the plurality of battery cells 110, 120, 130, and 140 included in the battery module 100. A sensor or various measurement modules for monitoring performed by the battery management apparatus 200, which are not shown, may be additionally installed in a charging/discharging path, any position of the battery module 100, etc. The battery management apparatus 200 may calculate a parameter indicating a state of the battery module 100, e.g., a state of charge (SoC), a state of health (SoH) etc., based on a measurement value such as monitored voltage, current, temperature, etc.

The battery management apparatus 200 may control an operation of the relay 300. For example, the battery management apparatus 200 may short-circuit the relay 300 to supply power to the target device. The battery management apparatus 200 may short-circuit the relay 300 when a charging device is connected to the battery pack 1000.

The battery management apparatus 200 may control to perform cell balancing of the plurality of battery cells 110, 120, 130, and 140. For example, the battery management apparatus 200 may determine whether cell balancing is required for at least any one of the plurality of battery cells 110, 120, 130, and 140. The battery management apparatus 200 may perform cell balancing on a battery cell determined to require cell balancing. For example, the battery management apparatus 200 may control to perform cell balancing by consuming energy of the battery cell determined to require cell balancing through a resistor (e.g., a first resistor). In another example, when passive cell balancing is performed, heat may be generated in the resistor, increasing the temperature and thus overheating a PCB, such that the battery management apparatus 200 may manage the temperature of the resistor for performing cell balancing not to increase more than a preset temperature.

The battery management apparatus 200 may include an NTC capable of sensing the temperature of the resistor that performs cell balancing, and the NTC may be located to have a temperature corresponding to the temperature of the resistor (the first resistor) that performs cell balancing. For example, the NTC may be located as close as possible to the resistor (the first resistor) that performs cell balancing. The battery management apparatus 200 may sense the temperature of the resistor (the first resistor) that performs cell balancing through the NTC, and continuously perform cell balancing with an auxiliary balancing resistor (a second resistor) when the temperature of the resistor (the first resistor) that performs cell balancing increases more than a set temperature. For example, the auxiliary balancing resistor (the second resistor) may have the same resistance as the cell balancing resistor (the first resistor).

The battery management apparatus 200 may perform balancing of a battery cell based on the cell balancing resistor (the first resistor) and the auxiliary balancing resistor (the second resistor). For example, the battery management apparatus 200 may manage the temperature of the cell balancing resistor (the first resistor) by performing cell balancing through the auxiliary balancing resistor (the second resistor) when the temperature of the cell balancing resistor (the first resistor) is equal to or more than a set temperature, in which a resistance of the auxiliary balancing resistor (the second resistor) is equal to the resistance of the cell balancing resistor (the first resistor) and thus the same current flows as that corresponding to cell balancing through the cell balancing resistor (the first resistor), thereby maintaining the speed of cell balancing.

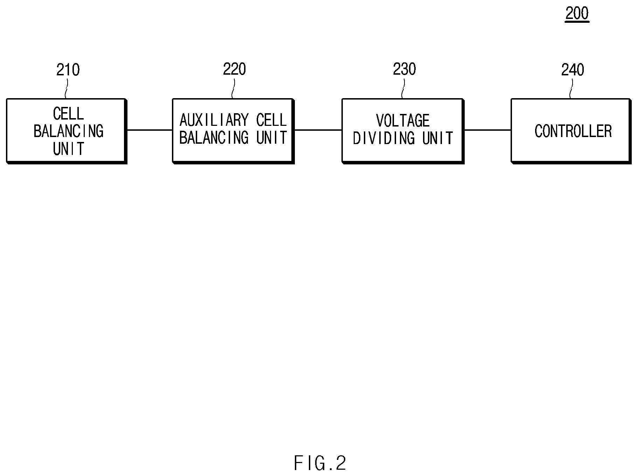

FIG. 2 is a block diagram of a battery management apparatus according to an embodiment disclosed herein.

Referring to FIG. 2, the battery management apparatus 200 according to an embodiment disclosed herein may include a cell balancing unit 210, an auxiliary cell balancing unit 220, a voltage dividing unit 230, and a controller 240. In an embodiment, the battery management apparatus 200 may be substantially the same as the battery management apparatus 200 of FIG. 1.

The cell balancing unit 210 may be connected to the battery cell. The cell balancing unit 210 may perform balancing on the battery cell. For example, the cell balancing unit 210 may perform passive balancing in which energy of the battery cell is consumed through a resistor. In an embodiment, a battery cell may be substantially the same as any one of the plurality of battery cells 110, 120, 130, and 140 of FIG. 1.

The cell balancing unit 210 may include the first resistor for performing balancing on the battery cell. The cell balancing unit 210 may include a first switch for controlling a current to flow through the first resistor. For example, the first resistor and the first switch may be serially connected to each other. In another example, the first switch may be controlled in terms of operations thereof from the controller 240.

The auxiliary cell balancing unit 220 may be connected to the battery cell. The auxiliary cell balancing unit 220 may perform auxiliary balancing on the battery cell. For example, the auxiliary cell balancing unit 220 may perform balancing on the battery cell when the temperature of the first resistor included in the cell balancing unit 210 is equal to or greater than a preset value. In another example, the auxiliary cell balancing unit 220 may perform balancing on the battery cell when the cell balancing unit 210 is in a state of being unable to perform balancing.

The auxiliary cell balancing unit 220 may include the second resistor for performing balancing on the battery cell. The auxiliary cell balancing unit 220 may also include a second switch for controlling a current to flow through the second resistor. For example, the second resistor and the second switch may be serially connected to each other. In another example, the second switch may be controlled in terms of operations thereof by a voltage applied from the voltage dividing unit 230. In an embodiment, the second resistor may have the same resistance as the first resistor. That is, a balancing current flowing when balancing is performed by the first resistor and an auxiliary balancing current flowing when auxiliary balancing is performed by the second resistor may be the same as each other.

In an embodiment, the cell balancing unit 210 and the auxiliary cell balancing unit 220 may be connected in parallel to each other.

The voltage dividing unit 230 may generate a divided voltage by dividing the voltage of the battery cell. For example, the voltage dividing unit 230 may generate the divided voltage by dividing the voltage of the battery cell based on a temperature of the cell balancing unit 210. The voltage dividing unit 230 may apply the generated divided voltage to the auxiliary cell balancing unit 220. For example, the voltage dividing unit 230 may apply the generated divided voltage to the second switch included in the auxiliary cell balancing unit 220, and the second switch may operate based on the generated divided voltage.

The voltage dividing unit 230 may include an NTC resistor and a third resistor to divide the voltage based on the temperature of the cell balancing unit 210. For example, the NTC resistor may be located in a position where it may have a temperature corresponding to the temperature of the first resistor included in the cell balancing unit 210. In another example, as a resistance of the NTC resistor changes with the temperature of the first resistor, the divided voltage generated in the voltage dividing unit 230 may change with the temperature of the first resistor. According to an embodiment, the NTC resistor and the third resistor included in the voltage dividing unit 230 may be connected in series to each other, and the voltage dividing unit 230 may divide the voltage of the battery cell through the NTC resistor and the third resistor to generate a divided voltage.

The voltage dividing unit 230 may input the generated divided voltage to the controller 240. The controller 240 may control the cell balancing unit 210 based on the generated divided voltage. For example, the controller 240 may short-circuit the first switch included in the cell balancing unit 210 when the generated divided voltage is less than or equal to a preset value, and open the first switch included in the cell balancing unit 210 when the generated divided voltage is equal to or greater than the preset value.

In an embodiment, when balancing of the battery cell is performed, at least one of the first switch included in the cell balancing unit 210 and the second switch included in the auxiliary cell balancing unit 220 may be short-circuited. For example, the first switch or the second switch may be short-circuited based on the divided voltage generated by the voltage dividing unit 230. According to an embodiment, in the battery management apparatus 200, any one of the first switch and the second switch may be short-circuited. According to another embodiment, in the battery management apparatus 200, both the first switch and the second switch may be short-circuited. According to another embodiment, in the battery management apparatus 200, when balancing of the battery cell is not performed, both the first switch and the second switch may be opened.

In an embodiment, the controller 240 may control an operation of the cell balancing unit 210 based on the voltage of the battery cell. For example, when balancing of the battery cell is required, the controller 240 may short-circuit the first switch included in the cell balancing unit 210. In another example, when balancing of the battery cell is not required, the controller 240 may open the first switch included in the cell balancing unit 210.

In an embodiment, the controller 240 may control an operation of the cell balancing unit 210 such that a temperature of the cell balancing unit 210 is neither equal to nor greater than a preset temperature. For example, the divided voltage may be generated in the voltage dividing unit 230 based on the temperature of the first resistor included in the cell balancing unit 210, and the controller 240 having received the generated divided voltage may control an operation of the first switch included in the cell balancing unit 210 based on the received divided voltage such that the temperature of the cell balancing unit 210 is neither equal to nor greater than a first set temperature.

In an embodiment, when the temperature of the cell balancing unit 210 is equal to or greater than a second set temperature, the auxiliary cell balancing unit 220 may perform auxiliary balancing of the battery cell. For example, the divided voltage may be generated in the voltage dividing unit 230 based on the temperature of the first resistor included in the cell balancing unit 210, and the generated divided voltage may be applied to the second switch included in the auxiliary cell balancing unit 220 to short-circuit the second switch, such that the auxiliary cell balancing unit 220 may perform auxiliary balancing of the battery cell through the second resistor. In an embodiment, the first set temperature may be equal to or higher than the second set temperature. In an embodiment, the first set temperature may be about 75 degrees Celsius, and the second set temperature may be about 60 degrees Celsius.

The battery management apparatus 200 according to an embodiment disclosed herein may perform balancing of the battery cell through the cell balancing unit 210 and the auxiliary cell balancing unit 220. For example, when balancing of the battery cell is required, balancing of the battery cell requiring balancing may be performed through the cell balancing unit 210, and when the temperature of the cell balancing unit 210 is equal to or greater than the first set temperature, balancing through the cell balancing unit 210 may be terminated. In this case, the auxiliary cell balancing unit 220 may perform balancing of the battery cell when the temperature of the cell balancing unit 210 is equal to or greater than the second set temperature, such that the battery management apparatus 200 may continuously perform balancing of the battery cell while managing the temperature of the cell balancing unit 210.

In addition, the battery management apparatus 200 according to an embodiment disclosed herein may sense the temperature of the cell balancing unit 210 through the NTC resistor included in the voltage dividing unit 230, and the voltage of the battery cell may be divided based on the temperature of the cell balancing unit 210. In this case, the controller 240 may control an operation of the cell balancing unit 210 based on the divided voltage, and an operating state of the auxiliary cell balancing unit 220 may be determined based on the divided voltage, such that the battery management apparatus 200 may unify and efficiently control the balancing operation of the battery cell based on the temperature of the cell balancing unit 210.

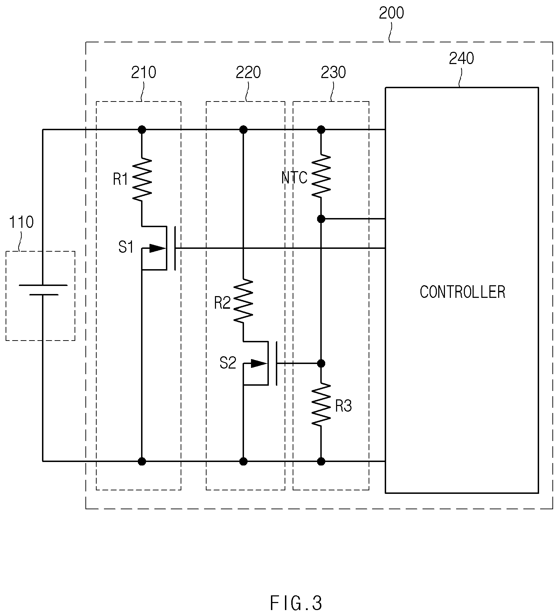

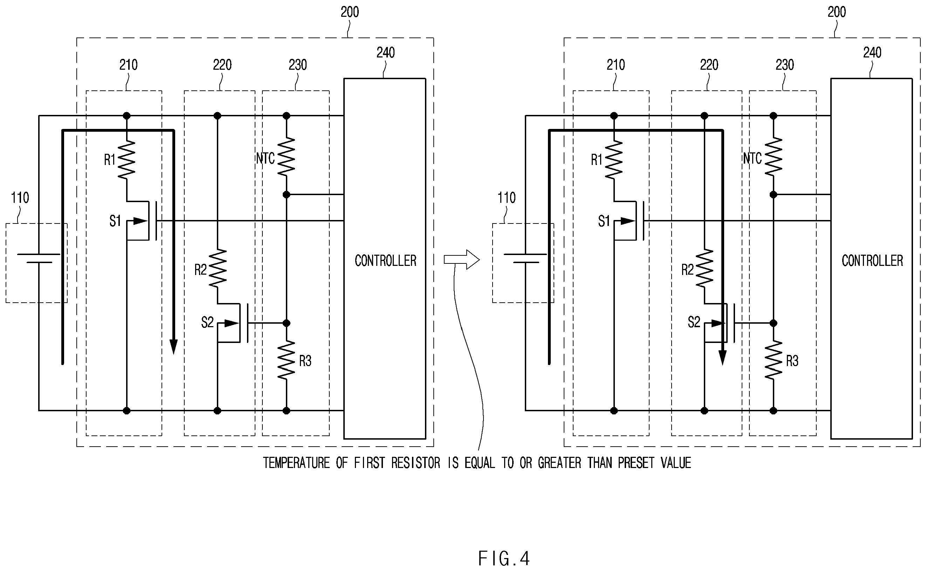

FIGS. 3 and 4 are views for describing an operation of a battery management apparatus, according to an embodiment disclosed herein.

Referring to FIG. 3, the battery management apparatus 200 may include the cell balancing unit 210, the auxiliary cell balancing unit 220, the voltage dividing unit 230, and the controller 240. The battery management apparatus 200 may perform balancing of the battery cell 110. In an embodiment, the battery cell 110 may be substantially the same as any one of the plurality of battery cells 110, 120, 130, and 140 of FIG. 1. The battery management apparatus 200 may also be substantially the same as the battery management apparatus 200 of FIG. 2.

The cell balancing unit 210 may include a first resistor R1 and a first switch S1. For example, the first resistor R1 and the first switch S1 may be serially connected to each other. When the first switch S1 is short-circuited, balancing may be performed on the battery cell 110 by the first resistor R1. In an embodiment, the first switch S1 may include any one of a PNP-type BJT, an NPN-type BJT, and a MOSFET.

The auxiliary cell balancing unit 220 may include a second resistor R2 and a second switch S2. For example, the second resistor R2 and the second switch S2 may be serially connected to each other. When the second switch S2 is short-circuited, balancing may be performed on the battery cell 110 by the second resistor R2. In an embodiment, the second switch S2 may include any one of a PNP-type BJT, an NPN-type BJT, and a MOSFET. In an embodiment, the second resistor R2 may have the same resistance as the first resistor R1. In an embodiment, the second resistor R2 may be located physically far from the first resistor R1 such that a temperature thereof is not changed by the temperature of the first resistor R1.

The cell balancing unit 210 and the auxiliary cell balancing unit 220 may be connected in parallel to each other.

The voltage dividing unit 230 may include an NTC resistor and a third resistor R3. For example, the NTC resistor and the third resistor R3 may be serially connected to each other. The voltage of the battery cell 110 may be divided through the NTC resistor and the third resistor R3. The divided voltage generated by the voltage dividing unit 230 may be input to the controller 240 or applied to the second switch S2. In an embodiment, the NTC resistor may have a temperature corresponding to the temperature of the first resistor R1. For example, the NTC resistor may be located physically close to the first resistor R1.

The second switch S2 may operate based on the divided voltage generated by the voltage dividing unit 230. For example, the second switch S2 may be opened when the generated divided voltage is less than or equal to a preset value, and the second switch S2 may be short-circuited when the generated divided voltage exceeds the preset value.

The controller 240 may receive the divided voltage generated by the voltage dividing unit 230, and control the first switch S1 based on the generated divided voltage. For example, the controller 240 may open the first switch S1 when the generated divided voltage is equal to or greater than a preset value, and may short-circuit the first switch S1 when the generated divided voltage is less than the preset value.

In an embodiment, the divided voltage in which the first switch S1 is opened and the divided voltage in which the second switch S2 is short-circuited may be the same as each other. In another embodiment, the divided voltage in which the first switch S1 is opened may be a first voltage and the divided voltage in which the second switch S2 is short-circuited may be a second voltage. In this case, the first voltage may be equal to or greater than the second voltage. That is, the first switch S1 and the second switch S2 may be short-circuited at the same time.

Referring to FIG. 4, when the temperature of the first resistor R1 is less than or equal to a preset value (the first set temperature), balancing may be performed on the battery cell 110 through the cell balancing unit 210. When the battery cell 110 performs passive balancing through the cell balancing unit 210, a current may flow through the first resistor R1 in which thermal energy may be generated, increasing the temperature thereof. The temperature of the first resistor R1 and the temperature of the NTC resistor may correspond to each other, and as the temperature of the NTC resistor increases, the resistance of the NTC resistor may decrease, increasing a divided voltage. The controller 240 may continuously receive the divided voltage, and may open the first switch S1 when the divided voltage increases more than a specific value. Thus, when the temperature of the first resistor R1 increases more than the preset value (the first set temperature), the controller 240 may open the first switch S1 to stop using the cell balancing unit 210.

The temperature of the NTC resistor may increase when the temperature of the first resistor R1 increases more than the preset value (the second set temperature), and the resistance of the NTC resistor may decrease when the temperature of the NTC resistor increases, increasing a divided voltage. When the divided voltage increases, the second switch S2 receiving the divided voltage is short-circuited, such that balancing may be performed on the battery cell 110 through the auxiliary cell balancing unit 220. In this case, the first resistor R1 and the second resistor R2 may have the same resistance, such that a balancing current for performing balancing of the battery cell 110 may be the same, and thus the auxiliary cell balancing unit 220 may perform balancing of the battery cell 110 at the same speed as the cell balancing unit 210. According to an embodiment, when balancing of the battery cell 110 through the first resistor R1 is terminated, the temperature of the first resistor R1 may decrease and when the temperature of the first resistor R1 is less than or equal to a specific temperature, then the controller 240 may short-circuit the first switch S1 to control the cell balancing unit 210 to perform balancing of the battery cell 210.

While it is shown in FIG. 4 that balancing of the battery cell 110 is performed through the cell balancing unit 210 when the temperature of the first resistor R1 is less than or equal to a preset value, and balancing of the battery cell 110 is performed through the auxiliary cell balancing unit 220 when the temperature of the first resistor R1 is equal to or greater than the preset value, the present disclosure is not limited thereto. For example, when the temperature of the first resistor R1 is the second set temperature (e.g., 600 degrees Celsius), the second switch S2 may be short-circuited such that the cell balancing unit 210 and the auxiliary cell balancing unit 220 may perform balancing of the battery cell 110 at the same time, and when the temperature of the first resistor R2 is the first set temperature (e.g., 75 degrees Celsius), the controller 240 may open the first switch S1 such that balancing of the battery cell 110 may be performed merely by the auxiliary cell balancing unit 220.

It is shown in FIGS. 2 to 4 that the number of auxiliary cell balancing units is one, but the present disclosure is not limited thereto. That is, the battery management apparatus according to an embodiment may include a plurality of auxiliary cell balancing units and may divide the temperature range of the cell balancing unit and perform management to perform balancing of the battery cell by the plurality of auxiliary cell balancing units.

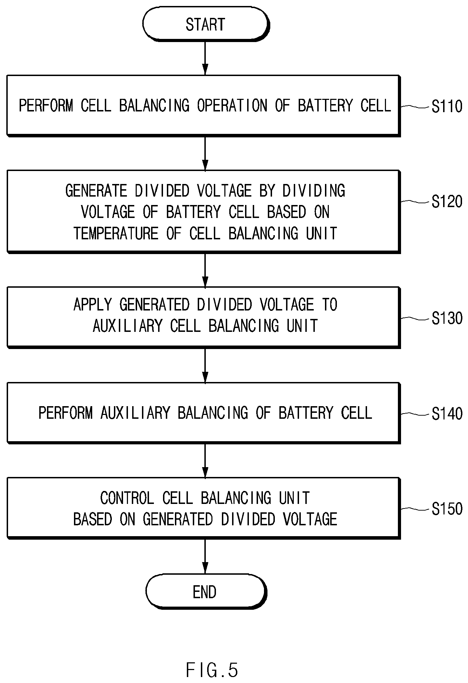

FIG. 5 is a flowchart of an operating method of a battery management apparatus according to an embodiment disclosed herein.

Referring to FIG. 5, an operating method of the battery management apparatus 200 according to an embodiment disclosed herein may include operation S110 of performing a cell balancing operation of a battery cell, operation S120 of generating a divided voltage by dividing a voltage of the battery cell based on a temperature of a cell balancing unit, operation S130 of applying the generated divided voltage to an auxiliary cell balancing unit, operation S140 of performing auxiliary balancing of the battery cell, and operation S150 of controlling the cell balancing unit based on the generated divided voltage.

In operation S110 of performing the cell balancing operation of the battery cell, the cell balancing unit 210 may perform the cell balancing operation of the battery cell. For example, the cell balancing unit 210 may include the first resistor and the first switch serially connected thereto, and when the first switch is short-circuited, the first resistor may consume energy of the battery cell, thereby performing balancing of the battery cell.

In operation S120 of generating the divided voltage by dividing the voltage of the battery cell based on the temperature of the cell balancing unit, the voltage dividing unit 230 may generate the divided voltage by dividing the voltage of the battery cell based on the temperature of the cell balancing unit 210. For example, the voltage dividing unit 230 may include the NTC resistor and the third resistor having a temperature corresponding to the temperature of the first resistor included in the cell balancing unit 210, and divide the voltage of the battery cell through the NTC resistor and the third resistor.

In operation S130 of applying the generated divided voltage to the auxiliary cell balancing unit, the voltage dividing unit 230 may apply the generated divided voltage to the auxiliary cell balancing unit 220. For example, the auxiliary cell balancing unit 220 may include the second resistor and the second switch serially connected thereto, and the generated divided voltage may be applied to the second switch.

In operation S140 of performing auxiliary balancing of the battery cell, the auxiliary cell balancing unit 220 may perform the auxiliary balancing of the battery cell. For example, the auxiliary cell balancing unit 220 may perform auxiliary balancing of the battery cell through the second resistor when the generated divided voltage is equal to or greater than a preset value, and may not perform auxiliary balancing of the battery cell when the generated divided voltage is less than or equal to the preset value.

In operation S150 of controlling the cell balancing unit based on the generated divided voltage, the controller 240 may control the cell balancing unit 210 based on the divided voltage generated by the voltage dividing unit 230. For example, the controller 240 may short-circuit the first switch included in the cell balancing unit 210 when the generated divided voltage is less than or equal to a preset value, and open the first switch included in the cell balancing unit 210 when the generated divided voltage is equal to or greater than the preset value.

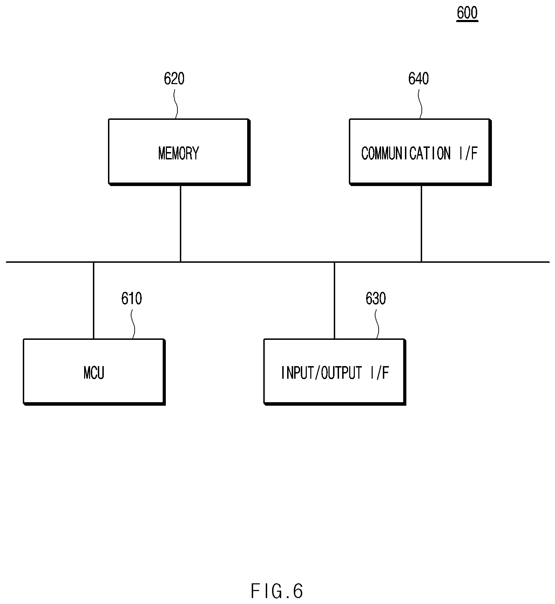

FIG. 6 is a block diagram showing a hardware configuration of a computing system for performing an operating method of a battery management apparatus, according to an embodiment disclosed herein.

Referring to FIG. 6, a computing system 600 according to an embodiment disclosed herein may include an MCU 610, a memory 620, an input/output I/F 630, and a communication I/F 640.

The MCU 610 may be a processor that executes various programs (e.g., a battery cell balancing program, a voltage sensing program, a switch control program, etc.) stored in the memory 620, processes various information including a divided voltage, etc., of a battery pack through these programs, and executes the above-described functions of the battery management apparatus shown in FIG. 2.

The memory 620 may store various programs regarding log information collection and diagnosis of the battery, etc. Moreover, the memory 620 may store various information such as a voltage, a divided voltage, etc. of the battery cell, etc.

The memory 620 may be provided in plural, depending on a need. The memory 620 may include volatile or nonvolatile memory. For the memory 620 as the volatile memory, random access memory (RAM), dynamic RAM (DRAM), static RAM (SRAM), etc., may be used. The memory 620 as the nonvolatile memory may be read only memory (ROM), programmable ROM (PROM), electrically alterable ROM (EAROM), erasable PROM (EPROM), electrically erasable PROM (EEPROM), flash memory, etc. The above-listed examples of the memory 620 are merely examples and are not limited thereto.

The input/output I/F 630 may provide an interface for transmitting and receiving data by connecting an input device (not shown) such as a keyboard, a mouse, a touch panel, etc., and an output device such as a display (not shown), etc., to the MCU 610.

The communication I/F 640, which is a component capable of transmitting and receiving various data to and from a server, may be various devices capable of supporting wired or wireless communication. For example, the battery management apparatus may transmit and receive a battery cell balancing program, information such as a current or a voltage of a battery, and information about battery cell balancing from an external server separately provided through the communication I/F 640.

As such, a computer program according to an embodiment disclosed herein may be recorded in the memory 620 and processed by the MCU 610, thus being implemented as a module that performs functions shown in FIG. 2.

## Claims

1. A battery management apparatus (200) comprising:
a cell balancing unit (210) connected to a battery cell (110, 120, 130, 140) and configured to perform balancing of the battery cell;
an auxiliary cell balancing unit (220) connected to the battery cell and configured to perform auxiliary balancing of the battery cell;
a voltage dividing unit (230) configured to generate a divided voltage by dividing a voltage of the battery cell based on a temperature of the cell balancing unit and apply the generated divided voltage to the auxiliary cell balancing unit; and
a controller (240) configured to control the cell balancing unit (210) based on the generated divided voltage;
**characterized in that** the auxiliary cell balancing unit (220) is further configured to perform auxiliary balancing of the battery cell when the temperature of the cell balancing unit is equal to or greater than a preset value.

2. The battery management apparatus of claim 1, wherein the cell balancing unit (210) comprises a first resistor (R1) and a first switch (S1),
the auxiliary cell balancing unit (220) comprises a second resistor (R2) and a second switch (S2), and
the cell balancing unit and the auxiliary cell balancing unit are connected in parallel to each other.

3. The battery management apparatus of claim 1 or 2, wherein the voltage dividing unit (230) comprises an NTC resistor and a third resistor (R3) having a resistance changing based on a temperature of the first resistor.

4. The battery management apparatus of claim 3, wherein the NTC resistor is positioned to have a temperature corresponding to the temperature of the first resistor.

5. The battery management apparatus of any of claims 1 to 4, wherein the voltage dividing unit (230) is further configured to apply the generated divided voltage to the second switch.

6. The battery management apparatus of any of claims 2 to 5, wherein any one of the first switch and the second switch is short-circuited based on the generated divided voltage.

7. The battery management apparatus of any of claims 2 to 6, wherein the first resistor and the second resistor have the same resistance as each other.

8. The battery management apparatus of any of claims 1 to 7, wherein the controller (240) is further configured to control an operation of the cell balancing unit (210) based on the voltage of the battery cell.

9. The battery management apparatus of claim 1, wherein the controller is further configured to control an operation of the cell balancing unit such that the temperature of the cell balancing unit is not equal to or greater than a preset value.

10. An operating method of a battery management apparatus, the operating method:
performing cell balancing of a battery cell;
generating a divided voltage by dividing a voltage of the battery cell based on a temperature of a cell balancing unit;
applying the generated divided voltage to an auxiliary cell balancing unit;
performing auxiliary balancing of the battery cell;
controlling the cell balancing unit based on the generated divided voltage; the method **characterized by** the step of
performing auxiliary balancing of the battery cell when the temperature of the cell balancing unit is equal to or greater than a preset value.

11. The operating method of claim 10, wherein the cell balancing unit comprises a first resistor and a first switch serially connected thereto,
the auxiliary cell balancing unit comprises a second resistor and a second switch serially connected thereto, and
the cell balancing unit and the auxiliary cell balancing unit are connected in parallel to each other.

## Patentansprüche

1. Batterieverwaltungsvorrichtung (200), umfassend:
eine Zellausgleicheinheit (210), welche mit einer Batteriezelle (110, 120, 130, 140) verbunden und dazu eingerichtet ist, einen Ausgleich der Batteriezelle durchzuführen;
eine Hilfszellausgleicheinheit (220), welche mit der Batteriezelle verbunden und dazu eingerichtet ist, einen Hilfsausgleich der Batteriezelle durchzuführen;
eine Spannungsteilereinheit (230), welche dazu eingerichtet ist, eine geteilte Spannung durch ein Teilen einer Spannung der Batteriezelle basierend auf einer Temperatur der Zellausgleicheinheit zu generieren und die generierte geteilte Spannung auf die Hilfszellausgleicheinheit anzuwenden; und
eine Steuerung (240), welche dazu eingerichtet ist, die Zellausgleicheinheit (210) basierend auf der generierten, geteilten Spannung zu steuern;
**dadurch gekennzeichnet, dass** die Hilfszellausgleicheinheit (220) ferner dazu eingerichtet ist, einen Hilfsausgleich der Batteriezelle durchzuführen, wenn die Temperatur der Zellausgleicheinheit gleich wie oder größer als ein vorbestimmter Wert ist.

2. Batterieverwaltungsvorrichtung nach Anspruch 1, wobei die Zellausgleicheinheit (210) einen ersten Widerstand (R1) und einen ersten Schalter (S1) umfasst,
die Hilfszellausgleicheinheit (220) einen zweiten Widerstand (R2) und einen zweiten Schalter (S2) umfasst, und
die Zellausgleicheinheit und die Hilfszellausgleicheinheit parallel zueinander verbunden sind.

3. Batterieverwaltungsvorrichtung nach Anspruch 1 oder 2, wobei die Spannungsteilereinheit (230) einen NTC-Widerstand und einen dritten Widerstand (R3) umfasst, welcher einen Widerstandswert aufweist, welcher sich basierend auf einer Temperatur des ersten Widerstands ändert.

4. Batterieverwaltungsvorrichtung nach Anspruch 3, wobei der NTC-Widerstand positioniert ist, um eine Temperatur entsprechend der Temperatur des ersten Widerstands aufzuweisen.

5. Batterieverwaltungsvorrichtung nach einem der Ansprüche 1 bis 4, wobei die Spannungsteilereinheit (230) ferner dazu eingerichtet ist, die generierte geteilte Spannung auf den zweiten Schalter anzuwenden.

6. Batterieverwaltungsvorrichtung nach einem der Ansprüche 2 bis 5, wobei ein beliebiger von dem ersten Schalter und dem zweiten Schalter basierend auf der generierten geteilten Spannung kurzgeschlossen ist.

7. Batterieverwaltungsvorrichtung nach einem der Ansprüche 2 bis 6, wobei der erste Widerstand und der zweite Widerstand den gleichen Widerstandswert wie der jeweils andere aufweisen.

8. Batterieverwaltungsvorrichtung nach einem der Ansprüche 1 bis 7, wobei die Steuerung (240) ferner dazu eingerichtet ist, einen Betrieb der Zellausgleicheinheit (210) basierend auf der Spannung der Batteriezelle zu Steuern.

9. Batterieverwaltungsvorrichtung nach Anspruch 1, wobei die Steuerung ferner dazu eingerichtet ist, einen Betrieb der Zellausgleicheinheit derart zu steuern, dass die Temperatur der Zellausgleicheinheit nicht gleich wie oder größer als ein vorbestimmter Wert ist.

10. Betriebsverfahren für eine Batterieverwaltungsvorrichtung, wobei das Betriebsverfahren:
einen Zellausgleich einer Batteriezelle durchführt;
eine geteilte Spannung durch ein Teilen einer Spannung der Batteriezelle basierend auf einer Temperatur einer Zellausgleicheinheit generiert;
die generierte geteilte Spannung auf eine Hilfszellausgleicheinheit anwendet;
einen Hilfsausgleich der Batteriezelle durchführt;
die Zellausgleicheinheit basierend auf der generierten geteilten Spannung steuert;
wobei das Verfahren **gekennzeichnet ist durch** den Schritt eines Durchführens eines Hilfsausgleichs der Batteriezelle, wenn die Temperatur der Zellausgleicheinheit gleich wie oder größer als ein vorbestimmter Wert ist.

11. Betriebsverfahren nach Anspruch 10, wobei die Zellausgleicheinheit einen ersten Widerstand und einen seriell damit verbundenen ersten Schalter umfasst,
die Hilfszellausgleicheinheit einen zweiten Widerstand und einen seriell damit verbundenen zweiten Schalter umfasst, und
die Zellausgleicheinheit und die Hilfszellausgleicheinheit parallel zueinander verbunden sind.

## Revendications

1. Appareil de gestion de batterie (200) comprenant :
une unité d'équilibrage de cellule (210) connectée à une cellule de batterie (110, 120, 130, 140) et configurée pour réaliser un équilibrage de la cellule de batterie ;
une unité d'équilibrage de cellule auxiliaire (220) connectée à la cellule de batterie et configurée pour réaliser un équilibrage auxiliaire de la cellule de batterie ;
une unité de division de tension (230) configurée pour générer une tension divisée en divisant une tension de la cellule de batterie sur la base d'une température de l'unité d'équilibrage de cellule et appliquer la tension divisée générée à l'unité d'équilibrage de cellule auxiliaire ; et
un dispositif de commande (240) configuré pour commander l'unité d'équilibrage de cellule (210) sur la base de la tension divisée générée ;
**caractérisé en ce que**
l'unité d'équilibrage de cellule auxiliaire (220) est en outre configurée pour réaliser un équilibrage auxiliaire de la cellule de batterie lorsque la température de l'unité d'équilibrage de cellule est supérieure ou égale à une valeur prédéfinie.

2. Appareil de gestion de batterie selon la revendication 1, dans lequel l'unité d'équilibrage de cellule (210) comprend une première résistance (R1) et un premier commutateur (S1),
l'unité d'équilibrage de cellule auxiliaire (220) comprend une deuxième résistance (R2) et un deuxième commutateur (S2), et
l'unité d'équilibrage de cellule et l'unité d'équilibrage de cellule auxiliaire sont connectées en parallèle l'une à l'autre.

3. Appareil de gestion de batterie selon la revendication 1 ou 2, dans lequel l'unité de division de tension (230) comprend une résistance NTC et une troisième résistance (R3) présentant une résistance qui varie en fonction d'une température de la première résistance.

4. Appareil de gestion de batterie selon la revendication 3, dans lequel la résistance NTC est positionnée pour présenter une température correspondant à la température de la première résistance.

5. Appareil de gestion de batterie selon l'une quelconque des revendications 1 à 4, dans lequel l'unité de division de tension (230) est en outre configurée pour appliquer la tension divisée générée au deuxième commutateur.

6. Appareil de gestion de batterie selon l'une quelconque des revendications 2 à 5, dans lequel l'un quelconque du premier commutateur et du deuxième commutateur est court-circuité sur la base de la tension divisée générée.

7. Appareil de gestion de batterie selon l'une quelconque des revendications 2 à 6, dans lequel la première résistance et la deuxième résistance présentent la même résistance.

8. Appareil de gestion de batterie selon l'une quelconque des revendications 1 à 7, dans lequel le dispositif de commande (240) est en outre configuré pour commander un fonctionnement de l'unité d'équilibrage de cellule (210) sur la base de la tension de la cellule de batterie.

9. Appareil de gestion de batterie selon la revendication 1, dans lequel le dispositif de commande est en outre configuré pour commander un fonctionnement de l'unité d'équilibrage de cellule de sorte que la température de l'unité d'équilibrage de cellule ne soit pas supérieure ou égale à une valeur prédéfinie.

10. Procédé de fonctionnement d'un appareil de gestion de batterie, le procédé de fonctionnement comprenant :
la réalisation d'un équilibrage de cellule d'une cellule de batterie ;
la génération d'une tension divisée par division d'une tension de la cellule de batterie sur la base d'une température d'une unité d'équilibrage de cellule ;
l'application de la tension divisée générée à une unité d'équilibrage de cellule auxiliaire ;
la réalisation d'un équilibrage auxiliaire de la cellule de batterie ;
la commande de l'unité d'équilibrage de cellule sur la base de la tension divisée générée ;
le procédé étant **caractérisé en ce que** l'étape de réalisation d'un équilibrage auxiliaire de la cellule de batterie est effectuée lorsque la température de l'unité d'équilibrage de cellule est supérieure ou égale à une valeur prédéfinie.

11. Procédé de fonctionnement selon la revendication 10, dans lequel l'unité d'équilibrage de cellule comprend une première résistance et un premier commutateur connectés en série à celle-ci,
l'unité d'équilibrage de cellule auxiliaire comprend une deuxième résistance et un deuxième commutateur connectés en série à celle-ci, et
l'unité d'équilibrage de cellule et l'unité d'équilibrage de cellule auxiliaire sont connectées en parallèle l'une à l'autre.
